(19) **Europäisches Patentamt**
**European Patent Office**
**Office européen des brevets**

(11) **EP 1 325 352 B1**

(12) **EUROPEAN PATENT SPECIFICATION**

(45) Date of publication and mention
of the grant of the patent:
**28.07.2010 Bulletin 2010/30**

(51) Int Cl.:
***G01S 13/94*** *(2006.01)*    ***G01C 21/00*** *(2006.01)*

(21) Application number: **01972868.2**

(22) Date of filing: **02.10.2001**

(86) International application number:
**PCT/SE2001/002132**

(87) International publication number:
**WO 2002/031532 (18.04.2002 Gazette 2002/16)**

(54) **ADAPTIVE MEASUREMENT CORRECTION DURING REMOTE DISTANCE MEASUREMENT**

ADAPTIVE MESSWERTKORREKTUR WÄHREND DER FERNDISTANZMESSUNG

CORRECTION DE MESURE ADAPTATIVE EFFECTUEE EN COURS DE TELEMESURE

(84) Designated Contracting States:
**AT BE CH CY DE DK ES FI FR GB GR IE IT LI LU MC NL PT SE TR**

(30) Priority: **13.10.2000 SE 0003714**

(43) Date of publication of application:
**09.07.2003 Bulletin 2003/28**

(73) Proprietor: **SAAB AB**
**581 88 Linköping (SE)**

(72) Inventors:
• **SVENSSON, Martin**
**SE-589 35 Linköping (SE)**
• **NEREGARD, Fredrik**
**S-587 34 LinköLping (SE)**
• **PERSSON, Niklas**
**S-433 62 Sävedalen (SE)**

(74) Representative: **Holmberg, Magnus et al**
**Albihns.Zacco**
**Valhallavägen 117**
**Box 5581**
**114 85 Stockholm (SE)**

(56) References cited:
• **PUCAR P. ET AL.: 'Saab NINS/NILS-an autonomous system for gripen' IEEE 2000 POSITION LOCATION AND NAVIGATION SYMPOSIUM 13 March 2000 - 16 March 2000, pages 254 - 261, XP002906839**
• **ZELENKA R.: 'Flight test development and evaluation of a Kalman estimator for low-altitude flight' SECOND IEEE CONFERENCE ON CONTROL APPLICATIONS vol. 2, 13 September 1993 - 16 September 1993, pages 783 - 790, XP000451599**

**Description**

THE BACKGROUND OF THE INVENTION AND PRIOR ART

The present invention relates generally to navigating crafts by means of remote distance measurement, where a remote distance meter's inclination to erroneously measure the shortest distance to the surface over which the craft moves is adjusted adaptively. Specifically, the invention relates to a method and an apparatus for navigating a craft according to the preambles of claim 1 and claim 8 respectively. The invention also relates to a computer program for performing the method according to claim 1 and a computer readable medium having such program recorded thereon.

It is generally known to utilize radar technology to determine the distance and bearing to objects (radar = radio detecting and ranging). By performing doppler detection it is also possible to determine radial velocity relationships between the radar and the registered objects.

The article "Saab NINS - An automated Navigation System", by P. Bergljung et al, 1 November, 1999, No. A, Saab Dynamics AB, describes how an aircraft can be navigated based on the appearance of the surface over which the aircraft moves. A radar altimeter in the aircraft sends signals towards the surface and determines the altitude over the surface by analyzing the signals being reflected against the surface. Information in a database pertaining to the surface's elevation in the area within which the aircraft is located is compared with a latest measured elevation of the surface. Conclusions can thereby be drawn as to the aircraft's position. A so-called measurement shell represents an uncertainty volume of a predetermined size within which the craft is estimated to be positioned. By repeated measurements and measurement shell assumptions the size of the measurement shell is reduced and the craft's position can be determined with a higher accuracy.

The Article "SAAB" NINS/NILS - an autonomous landing system for Gripen" by Pucar et al. in IEEE 2000 Position Location and Navigation Symposium, 13-16 March 2000, pp 254-261, is an example of a navigation system which comprises a topographic database and a radar altimeter. The radar altimeter does not actually measure the aircraft's altitude above ground but rather a distance to the closest object within a beam width by transmitting a modulated signal toward the ground. The time elapsed between transmission of the modulated signal and its reception after reflection on the ground is converted to altitude. The measured ground profile beneath the aircraft is compared with the elevation database stored in the aircraft and thereby the position of the aircraft can be found.

A so-called terrain reference navigation filter, which utilizes a radar altimeter and which has been proposed by the applicant, assumes certain characteristics of the noise being associated with the radar measurement. The noise is thereby supposed to be due to the fact that the measurement occasionally is not performed with respect to the actual ground surface, but against objects being located on the surface, such as trees, posts and masts. In order to make the terrain reference navigation filter independent of such noise, the measurement shell is selected with such thickness that the aircraft certainly can be said to be located within the measurement shell irrespective of the noise.

When performing radar altitude measurements an uncertainty arises due to the fact that the signal that is received by the radar might not have been reflected by the surface in a desired reference direction. Most commonly, this direction is set vertically with respect to the mean sea level. An uncertainty is introduced in the measurement as soon as reflections in other directions than the reference direction could be interpreted as reflections in this direction.

If, for example when performing radar altitude measurement from an aircraft, a radar echo corresponding to a reflection from a knoll in the surface, which is located closer to the aircraft than the surface vertically below, however in a direction obliquely below the aircraft, is interpreted as a vertical radar reflection the position information will be erroneous.

For reasons of precision, it is of course desirable to minimize the uncertainty area when determining the position for a craft. Since the navigation method presupposes that all remote distance measurements (e.g. performed by means of a radar) are executed vertically below the craft it is thus desirable to reduce the influence of remote distance measurements in other directions as much as possible, since this introduces uncertainty in the navigation method.

The yet known solutions for radar altitude measurement aided navigation fail to take into account the radar's inclination to measure a distance, which is angularly erroneous with respect to the surface over which the craft moves.

SUMMARY OF THE INVENTION

The object of the present invention is therefore to alleviate the above problems and improve the precision as well as the robustness of the earlier known solutions for remote distance measurement based terrain navigation.

According to one aspect of the invention the object is achieved by a method for measurement noise modeling in a remote distance meter as initially described, wherein the remote distance measurement employs a measurement correction parameter which for each geographical position and altitude designates an estimation of a remote distance meter's inclination to measure a shortest distance between the craft and the surface in a direction which deviates from a desired measurement direction.

According to another aspect of the invention the object is achieved by a computer program, which is directly loadable into the internal memory of a computer, comprising software for performing the steps of any of the method described in the above paragraph, when said program is run on the computer.

According to yet another aspect of the invention the object is achieved by a computer readable medium, having a program recorded thereon, where the program is to make a computer perform the method proposed in the penultimate paragraph above.

According to still another aspect of the invention the object is achieved by the initially described apparatus, wherein, for each geographical position and altitude, a measurement correction parameter designates an estimation of a remote distance meter's inclination to measure a shortest distance between the craft and the surface in a direction which deviates from a desired measurement direction. A control unit in the apparatus takes the measurement correction parameter into account when calculating the craft's geographical position

The proposed solution improves both the precision and the reliability during position determination by means of remote distance measurement. This, in turn, results in that the traffic security can be improved in any kind of craft traffic where such positioning is utilized, such as in aircraft navigation and marine navigation, on as well as below the water surface.

BRIEF DESCRIPTION OF THE DRAWINGS

The present invention is now to be explained more closely by means of preferred embodiments, which are disclosed as examples, and with reference to the attached drawings.

Figure 1    illustrates how an aircraft equipped with an apparatus according to the invention passes over a terrain segment whereby a first step of a per se known procedure for determining the craft's geographical position is effected,

Figure 2    shows a later stage of the procedure according to figure 1, for determining the craft's geographical position,

Figure 3    shows yet a later stage of the procedure according to figure 1,

Figure 4    illustrates, by means of an example, the procedure according to an embodiment of the invention,

Figure 5    illustrates an embodiment of the apparatus according to the invention, and

Figure 6    illustrates, by means of a flow chart, the general procedure according to the invention, which preferably is controlled by a computer program.

DESCRIPTION OF PREFERRED EMBODIMENTS OF THE INVENTION

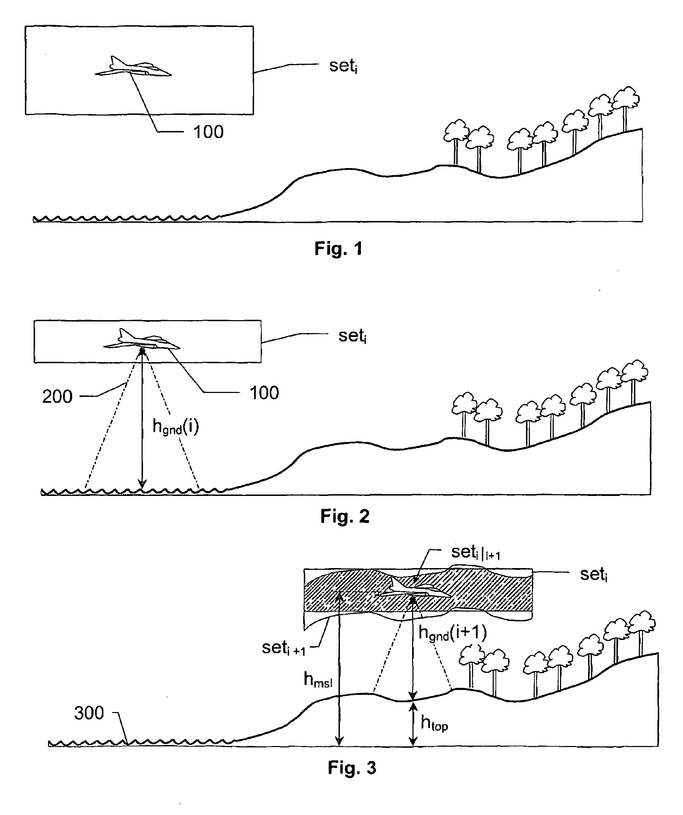

Figure 1 shows an aircraft 100, which is equipped with an apparatus according to the invention. The aircraft 100 passes over a terrain segment when the proposed apparatus is activated and a procedure for determining the aircraft's 100 position is instigated. Initially, a measurement shell $set_i$ is assumed, which has a maximum size and typically is a cylindrical volume being several kilometers in width and whose height is arbitrary, within which the aircraft 100 is presumed to be located.

Figure 2 illustrates how the apparatus in the aircraft 100 in a later stage of the procedure for determining the aircraft's 100 position performs a radar altitude measurement, through which the aircraft's distance in height above the surface is determined. The apparatus includes a radar whose transmitter- and receiver antennae have relatively large lobe angles (e.g. 40°-60°) and whose cut area, for instance, may be elliptical. The larger the lobe angle, the larger the risk of receiving radar reflections from directions which deviate from the desired direction, since any reflection within the range of the antenna lobe may be interpreted as a ground reflection in the desired reference direction irrespective of whether it in fact comes from this direction or not. A too small antenna lobe angle will, however, render the radar altimeter sensitive to changes in the direction of the aircraft, e.g. during rolling or tipping.

The transmitter antenna transmits a radar signal and the receiver antenna, which may be identical with the transmitter antenna, receives a reflected signal. The time difference between the transmitted signal and the received signal constitutes a measure of the distance $h_{gnd}(i)$ between the aircraft 100 and the object that reflected the transmitted signal, since the radar signal is presumed to propagate at a constant and known speed, namely the speed of light. According to a basic assumption, it is the ground below the aircraft 100 that has reflected the transmitted signal. The aircraft 100 is thus expected to be located at a distance $h_{gnd}(i)$ above the ground.

By the radar altitude measurement, the measurement shell $set_i$ can be reduced in height to a particular thickness. This thickness is stipulated by an estimated uncertainty in height in the radar altitude measurement. The height of any objects located on the surface (in this case the ground) places a limit as to the thickness of the measurement shell set$_i$. The precision of the radar altitude measurement is hence determined by the modeling of the surface's capability to reflect radar signals. Normally, the lower limit for the thickness of the measurement shell set$_i$ is put equal to the height of the highest expected objects on the ground. A decrease of the measurement shell's set$_i$ thickness below this limit jeopardizes the robustness of the measurement method, and eventually reduces the precision in the position determination.

Figure 3 shows a yet later stage of the procedure for determining the aircraft's 100 position, when another radar altitude measurement is performed. The height reduced measurement shell set$_i$ is expanded to some extent in order to take into consideration the uncertainty in position being introduced due to the movement of the aircraft 100. Furthermore, the measurement shell set$_i$ is shifted a distance, which corresponds to the aircraft's 100 estimated movement since the previous radar altitude measurement. Sensors in the aircraft 100, for instance in the form of inertial gyros, accelerometers and pressure meters can be used to register such movement.

The renewed radar altitude measurement provides an updated value of the distance estimation $h_{gnd}(i+1)$ to the ground. A new measurement shell set$_{i+1}$ based on this estimation is assumed. When determining the aircraft's 100 position an assumption is made that on one hand the aircraft is located within the shifted and expanded measurement shell set$_i$, and on the other hand is located within the new measurement shell set$_{i+1}$, which was obtained via the latest radar altitude measurement. The aircraft 100 is thus presupposed to be located within a cut volume set$_{i|i+1}$, which overlaps the shifted and expanded measurement shell set$_i$ as well as the latest measurement shell set$_{i+1}$. The aircraft's 100 position can thereby be estimated with an accuracy corresponding to the cut volume set$_{i|i+1}$.

A further refined position determination for the aircraft 100 can be obtained by means of repeated measurements of the aircraft's movement, repeated radar altitude measurements and comparisons with registered information pertaining to the ground's elevation $h_{top}$ over the mean sea level at particular geographical positions. Furthermore, an estimation of the aircraft's 100 elevation $h_{msl}$ over the mean sea level 300 can be acquired according to the relationship $h_{msl} = h_{top} + h_{gnd}(i+1)$.

Typically, the ground's actual elevation $h_{top}$ over the mean sea level is assumed to be registered at certain geographical positions in an orthogonal check pattern with 50 meters distance in each direction between two neighboring coordinate points. This information is stored in a database in the aircraft 100. An estimation of the ground's elevation between the stored positions is preferably calculated by means of bi-linear interpolation.

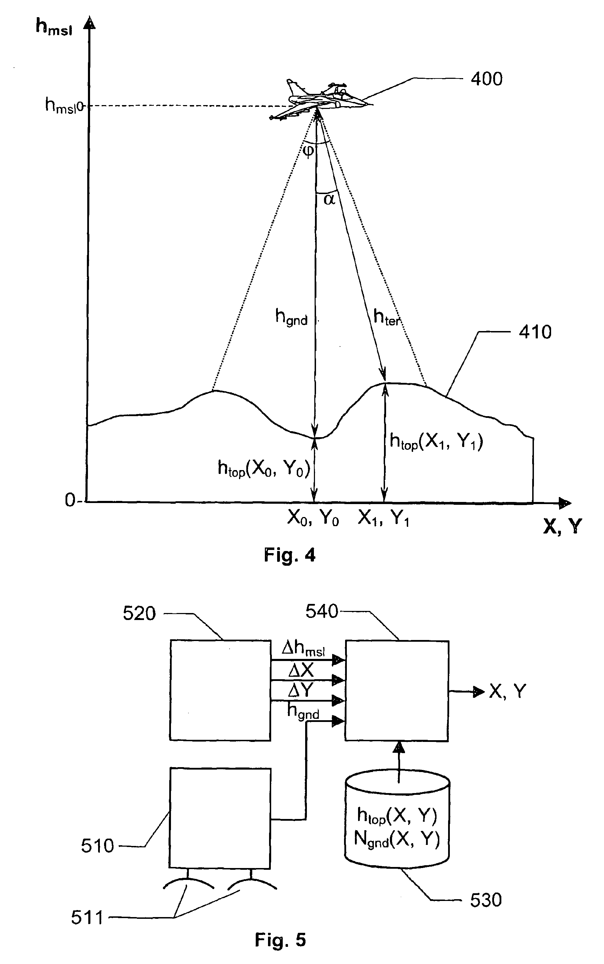

Figure 4 shows an aircraft 400, which travels over a ground surface 410. The method according to an embodiment of the invention will be exemplified below with reference to the figure 4. When performing a radar altitude measurement against a terrain segment where the ground's 410 elevation varies, such as in this figure, the radar having a lobe angle φ in the aircraft 400, risk measuring a shortest radar distance $h_{ter}$ between the aircraft 400 and the ground surface 410 in a different direction α ≤ φ than vertically against the mean sea level. The radar distance $h_{ter}$ is namely (roughly) registered with respect to the first received signal reflection whose power level exceeds a particular threshold level. When the aircraft 400 is positioned at a reference altitude $h_{msl}0$ over the mean sea level 0 at a first geographical position $X_0, Y_0$ it is therefore relatively probable that a radar signal, which has been reflected by the ground surface 410 at a second geographical position $X_1, Y_1$ is the first received signal whose power level exceeds the threshold level, since at this second geographical position $X_1, Y_1$ the distance between the ground surface 410 and the aircraft 400 is the shortest. When flying over the same first geographical position $X_0, Y_0$, however at a different reference altitude $h_{msl}$, the shortest radar distance $h_{ter}$ between the aircraft 400 and the ground surface 410 will nevertheless probably be measured against a different point beside both the first geographical position $X_0, Y_0$ and the second geographical position $X_1, Y_1$. If, at radar altitude measurement, it is desired to compensate for the radar's inclination to measure a shortest radar distance $h_{ter}$ between the aircraft 400 and the ground surface 410 in a different direction α than the desired direction it is thus necessary to perform such compensation not only with respect to geographical position X, Y, however also with respect to the flying altitude $h_{msl}$.

An embodiment of the invention involves calculation of a corrected radar distance $h_{gnd}^{corr}$ as the sum of an expected measured radar distance $h_{ter}$ and a measurement correction parameter $h_\Delta$ at particular geographical positions X, Y (typically in an orthogonal check pattern with 50 meters distance in each direction between two neighboring coordinate points) and for particular reference altitudes $h_{msl}$ within a certain geographical area (typically a country, a continent or the entire earth). A database in the aircraft 400 stores pre-calculated measurement correction parameters $h_\Delta$ for the coordinates $X, Y, h_{msl}$ together with topographical data $h_{top}$.

According to another embodiment of the invention, a relevant measurement correction parameter $h_\Delta$ is instead calculated in real time, according to the expression (1), below whenever this parameter is required.

Storing a large number of pre-calculated measurement correction parameters $h_\Delta$, of course, requires a relatively large database, while real time calculation of the measurement correction parameters $h_\Delta$ demands a comparatively powerful processor. If measurement correction parameters $h_\Delta$ are pre-calculated for particular coordinates $X, Y, h_{msl}$ and if a radar altitude measurement is performed in a point in space, which does not coincide with a registered coordinate

$X,Y,h_{msl}$, the necessary data is interpolated from corresponding data regarding the closest registered coordinates.

Irrespective of when the measurement correction parameter $h_\Delta$ is calculated, it is determined as a maximum difference between a correct distance $h_{gnd}$ at a particular geographical position and altitude, such as $X_0,Y_0$ and $h_{msl}0$ respectively, and an expected erroneously measured distance $h_{ter}$ at this position and altitude. This can be accomplished by calculating the expected erroneously measured distance $h_{ter}$ according to the expression (1).

$$\sqrt{(X_0 - X_1)^2 + (Y_0 - Y_1)^2 + (h_{msl} - h_{top}(X_1,Y_1))^2} \qquad (1)$$

where $X_0,Y_0$ denotes the particular geographical position,
$h_{msl}$ denotes the particular altitude,
$X_1,Y_1$ denotes the geographical position on the surface against which the remote distance meter is expected to measure an erroneous distance, and
$h_{top}(X_1,Y_1)$ denotes the surface's vertical distance to the mean sea level at the geographical position against which the remote distance meter is expected to measure the erroneous distance.

With information regarding the remote distance meter's expected inclination to, when performing remote distance measurement from particular space coordinates $X,Y,h_{msl}$, measure a specific shortest distance $h_{ter}$ between the aircraft 400 and the ground surface 410 in undesired measurement directions $\alpha$ against the ground surface 410, it is hence possible to compensate for the anomaly by adding a corresponding measurement correction parameter $h_\Delta(X,Y, h_{msl})$. A corrected distance is thus obtained by the relationship

$$h_{gnd}^{corr}(X,Y,h_{msl}) = h_{ter}(X,Y,h_{msl}) + h_\Delta(X,Y,h_{msl}).$$

During aircraft navigation the aircraft's altitude $h_{msl}(X,Y)$ over the mean sea level can be calculated as the sum of the ground's 410 topographical elevation $h_{top}(X,Y)$ over the mean sea level and the corrected distance $h_{gnd}^{corr}(X,Y,h_{msl})$. During navigation under water the craft's depth underneath the mean sea level can be calculated, in a corresponding manner, as the difference between the bottom's topographical depth $d_{top}(X,Y)$ and a corrected depth $d_{gnd}^{corr}(X,Y,h_{msl})$.

An embodiment of the apparatus according to the invention is shown schematically in figure 5. The apparatus includes a remote distance meter 510, which typically is constituted by a radar, however also can be a laser distance meter or an acoustical distance meter in the form of, for example a sonar. The remote distance meter 510, in turn, includes at least one means 511 for transmission and reception of signals. The means 511 is thus at least one radar antenna, a laser including a sensor or corresponding sonar sensors. According to a preferred embodiment of the invention, the remote distance meter 510 is equipped with two separate means 511 for transmission and reception respectively. The remote distance meter 510 delivers values of measured distances $h_{gnd}$ between the craft and the surface over which it moves to a control unit 540. The control unit 540 also receives signals $h_{msl}$, $\Delta X$ and $\Delta Y$ from a movement meter 520, which represent estimations of the craft's relative movement in space.

In those cases when the craft travels above the sea level the movement meter 520 normally includes a barometric sensor, inertial gyros, accelerometers and/or a GPS-receiver (GPS = Global Positioning System). When navigating under water, the movement meter 520 instead preferably includes a pressure meter designed to measure the pressure of the water that surrounds the craft plus, for example, inertial gyros and accelerometers. When navigating a craft at sea level (i.e. typically a surface ship) it is normally sufficient if the movement meter 520 includes sensors for registering horizontal movements, i.e. two-dimensional inertial gyros and accelerometers for example. In addition to the signals $\Delta h_{msl}$, $\Delta X$ and $\Delta Y$ from the movement meter 520, the control unit 540 retrieves topographical data $h_{top}(X,Y)$ and measurement models $N_{gnd}(X,Y)$ for relevant geographical positions from a database 530.

According to an embodiment of the invention, the control unit 540 moreover retrieves pre-calculated measurement correction parameters $h_\Delta(X,Y,h_{msl})$ for relevant geographical positions $X,Y$ from the database 530. According to another embodiment of the invention, the control unit 540 instead calculates a measurement correction parameter $h_\Delta(X,Y,h_{msl})$ in real time for relevant geographical positions $X,Y$.

Based on a corrected distance $h_{gnd}^{corr}(X, Y, h_{msl})$, the signals $\Delta h_{msl}$, $\Delta X$ and $\Delta Y$, and the information $h_{top}$ (X,Y) from the database 530 (alternatively: real time calculation in the control unit 540), the movement meter 520 respective the database 530, the control unit then calculates the craft's position according to the procedure described with reference to the figures 1 - 3 above.

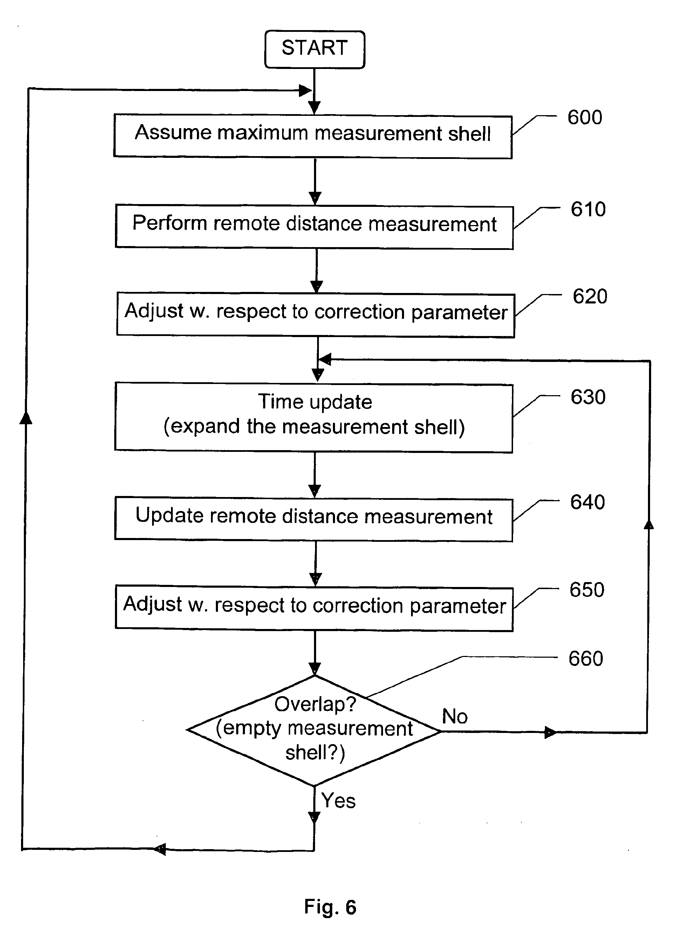

Figure 6 shows a flow chart, which illustrates the general method according to the invention that is employed when a craft navigates with aid from remote distance measurement against a surface. A first step 600 assumes a measurement shell of maximum size as in the first procedure step described with reference to figure 1. A following step 610, performs a remote distance measurement whereby a measured distance between the craft and the surface is obtained. A step 620 thereafter models the remote distance meter's inclination to measure a shortest distance between the craft and the surface over which it moves in a direction that deviates from a desired measurement direction. The distance measured in the step 610 is thereby adjusted by addition of a measurement correction parameter as described above. The measurement correction parameter can either be calculated in real time or be pre-calculated for particular coordinate points between which a relevant value is interpolated when necessary. In a next step 630, a time update takes place due to the movement of the craft whereby the measurement shell is updated. A step 640 after that, performs a renewed remote distance measurement and a new distance to the surface is obtained. A following step 650 updates also the model pertaining to the remote distance meter's inclination to measure the shortest distance between the craft and the surface over which it moves in a direction which deviates from a desired measurement direction. This update is necessary because the surface beneath the craft has changed since the previous remote distance measurement. The distance measured in the step 640 is thereby adjusted by addition of a new measurement correction parameter, which in similarity with the previous measurement correction parameter, either is calculated in real time or has been pre-calculated. Subsequently, the measurement shell is reduced according to the procedure earlier described with reference to figure 3. A following step 660 investigates whether the measurement shell has been reduced to an empty volume, i.e. whether there is an overlap between the previous measurement shell and the latest measurement shell. Provided that these measurement shells overlap the position can be determined with an increased accuracy and the procedure is returned to the step 630 for a time update. Otherwise, the procedure is returned to the first step 600, where a maximum sized measurement shell again is assumed.

The above-described method steps are preferably controlled by a computer and can thus be realized in software code. Naturally, such code can be stored on arbitrary computer readable medium, be transferred via any kind of transmission medium and format and be stored into the primary memory of a general computer.

Naturally, the present invention does not preclude that parameters in addition to the suggested measurement correction parameter and the corrected distance are used in order to describe the measurement errors, which are expected to occur during remote distance measurement. In particular, it is not precluded that the invention be combined with a solution where a measurement noise parameter is utilized, which for particular geographical positions designates an estimation of the surface's inclination to cause measurement noise when measuring a distance against it.

## Claims

1. A method for navigating a craft (100, 400) by means of remote distance measurement comprising the steps of:

>  measuring a distance between the craft (100, 400) and a surface (410) over which the craft (100, 400) moves,
>  registering a relative movement of the craft (100, 400),
>  retrieving topographical information pertaining to the vertical distance between the surface (410) and the mean sea level (300) at certain geographical positions, and
>  combining the distance and the relative movement with the topographical information for determining a geographical position, wherein
>  the remote distance measurement employing a measurement correction parameter which for each geographical position and altitude in relation to the mean sea level (300) designates an estimation of a remote distance meter's (510) indication to measure a shortest distance between the craft (100, 400) and the surface (410) in a direction which deviates from a desired measurement direction, wherein
>  the desired measurement direction is represented by an imagined vertical line between the craft (100, 400) and the mean sea level (300), **characterised in that** the method further comprises:

>>  calculating, for each geographical position and altitude, a corrected distance as the sum of the measured distance and the measurement correction parameter, and
>>  calculating the measurement correction parameter as the maximum difference between a correct distance at the particular geographical position and altitude and an expected erroneously measured distance at this position and altitude.

**2.** A method according to claim 1, comprising calculating the expected erroneously measured distance as:

$$\sqrt{(X_0 - X_1)^2 + (Y_0 - Y_1)^2 + (h_{msl} - h_{top}(X_1, Y_1))^2}$$

where $X_0$, $Y_0$ denotes the particular geographical position,
$h_{msl}$, denotes the particular altitude,
$X_1$, $Y_1$ denotes the geographical position on the surface (410) against which the remote distance meter (510) is expected to measure an erroneous distance, and
$h_{top}(X_1, Y_1)$ denotes the surface's (410) vertical distance to the mean sea level (300) at the geographical position against which the remote distance meter (510) is expected to measure the erroneous distance.

**3.** A computer program directly loadable into the internal memory of a computer, comprising software for performing the steps of any of the claims 1-2 when said program is run on the computer.

**4.** A computer readable medium, having a program recorded thereof, where the program is to make a computer perform the steps of any of the claim 1-2.

**5.** An apparatus for navigating a craft (100, 400) by means of remote distance measurement comprising:

a remote distance meter (510) measuring a distance between the craft (100, 400) and a surface (410),
a movement meter (520) measuring a relative movement of the craft (100, 400),
a database (530) including information pertaining to the vertical distance between the surface (410) and the mean sea level (300) at certain geographical positions, and
a control unit (540) calculating the craft's (100, 400) geographical position based on at least a combination of the distance and the relative movement, wherein,
for each geographical position and altitude in relation to the mean sea level (300), a measurement correction parameter designates an estimation of a remote distance meters (510) inclination to measure a shortest distance between the craft (100, 400) and the surface (410) in a direction which deviates from a desired measurement direction, the desired measurement direction being represented by an imagined vertical line between the craft and the mean sea level (300), and
the control unit (540) taking the measurement correction parameter into account when calculating the craft's (100, 400) geographical position, **characterised in that**
a corrected distance is calculated, for each geographical position and altitude, as the sum of the measured distance and the measurement correction parameter, and
the measurement correction parameter is calculated as the maximum difference between a correct distance at the particular geographical position and altitude and an expected erroneously measured distance at this position and altitude.

**6.** An apparatus according to claim 5, wherein the database (530) stores pre-calculated measurement correction parameters for specific geographical positions and reference altitudes.

**7.** An apparatus according to claim 5, wherein the control unit (540) calculates a relevant measurement correction parameter in connection with calculating the craft's position (100, 400).

**Patentansprüche**

**1.** Verfahren zum Navigieren eines Flugzeugs (100, 400) mittels Fern-Distanzmessung, das die folgenden Schritte umfasst:

Messen einer Distanz zwischen dem Flugzeug (100, 400) und einer Oberfläche (410), über der sich das Flugzeug (100, 400) bewegt,

Registrieren einer relativen Bewegung des Flugzeugs (100, 400),

Beziehen topografischer Informationen bezüglich des vertikalen Abstandes zwischen der Oberfläche (410) und Normalnull (300) an bestimmten geografischen Positionen, und

Kombinieren der Distanz und der relativen Bewegung mit den topografischen Informationen, um eine geografische Position zu bestimmen, wobei

bei der Fern-Distanzmessung ein Messungs-Korrekturparameter eingesetzt wird, der für jede geografische Position und Höhe in Bezug auf Normalnull (300) einen Schätzwert einer Neigung einer Fern-Distanzmesseinrichtung (510) angibt, um eine kürzeste Distanz zwischen dem Flugzeug (100, 400) und der Oberfläche (410) in einer Richtung zu messen, die von einer gewünschten Messungsrichtung abweicht, wobei die gewünschte Messungsrichtung durch eine imaginäre vertikale Linie zwischen dem Flugzeug (100, 400) und Normalnull (300) dargestellt wird, **dadurch gekennzeichnet, dass** das Verfahren des Weiteren umfasst:

Berechnen einer korrigierten Distanz für jede geografische Position und Höhe als die Summe der gemessenen Distanz und des Messungs-Korrekturparameters, und

Berechnen des Messungs-Korrekturparameters als die maximale Differenz zwischen einer fehlerfreien Distanz an der bestimmten geografischen Position und Höhe und einer erwarteten fehlerhaft gemessenen Distanz an dieser Position und Höhe.

2. Verfahren nach Anspruch 1, das Berechnen der erwarteten fehlerhaft gemessenen Distanz als:

$$\sqrt{(X_0 - X_1)^2 + (Y_0 - Y_1)^2 + (h_{mst} - h_{top}(X_1, Y_1))^2}$$

umfasst, wobei

$X_0$, $Y_0$ die bestimmte geografische Position bezeichnet,

$h_{mst}$ die bestimmte Höhe bezeichnet,

$X_1$, $Y_1$ die geografische Position auf der Oberfläche (410) bezeichnet, an der die Fern-Distanzmesseinrichtung (510) erwartungsgemäß eine fehlerhafte Distanz misst, und

$H_{top}(X_1, Y_1)$ die vertikale Distanz der Oberfläche (410) zu Normalnull (300) an der geografischen Position bezeichnet, an der die Fern-Distanzmesseinrichtung (510) erwartungsgemäß die fehlerhafte Distanz misst.

3. Computerprogramm, das direkt in den internen Speicher eines Computers geladen werden kann, wobei es Software umfasst, durch die die Schritte nach einem der Ansprüche 1-2 durchgeführt werden, wenn das Programm auf dem Computer ausgeführt wird.

4. Computerlesbares Medium, auf dem ein Programm aufgezeichnet ist, wobei das Programm einen Computer veranlasst, die Schritte nach einem der Ansprüche 1-2 durchzuführen.

5. Vorrichtung zum Navigieren eines Flugzeugs (100, 400) mittels Fern-Distanzmessung, die umfasst:

eine Fern-Distanzmesseinrichtung (510), die eine Distanz zwischen dem Flugzeug (100, 400) und einer Oberfläche (410) misst,

eine Bewegungsmesseinrichtung (520), die eine relative Bewegung des Flugzeugs (100, 400) misst,

eine Datenbank, die Informationen bezüglich der vertikalen Distanz zwischen der Oberfläche (410) und Normalnull (300) an bestimmten geografischen Positionen enthält, und

eine Steuereinheit (510), die die geografische Position des Flugzeugs (100, 400) basierend wenigstens auf einer Kombination der Distanz und der relativen Bewegung berechnet, wobei

für jede geografische Position und Höhe in Bezug auf Normalnull (300) ein Messungs-Korrekturparameter einen Schätzwert einer Neigung einer Fern-Distanzmesseinrichtung (510) angibt, um eine kürzeste Distanz zwischen dem Flugzeug (100, 400) und der Oberfläche (410) in einer Richtung zu messen, die von einer gewünschten Messungsrichtung abweicht, wobei die gewünschte Messungsrichtung durch eine imaginäre vertikale Linie zwischen dem Flugzeug und Normalnull (300) dargestellt wird, und

die Steuereinheit (540) den Messungs-Korrekturparameter beim Berechnen der geografischen Position des Flugzeugs (100, 400) berücksichtigt, **dadurch gekennzeichnet, dass**

eine korrigierte Distanz für jede geografische Position und Höhe als die Summe der gemessenen Distanz und des Messungs-Korrekturparameters berechnet wird, und

der Messungs-Korrekturparameter als die maximale Differenz zwischen einer fehlerfreien Distanz an der bestimmten geografischen Position und Höhe sowie einer erwarteten fehlerhaft gemessenen Distanz an dieser Position und Höhe berechnet wird.

**6.** Vorrichtung nach Anspruch 5, wobei die Datenbank (530) vorberechnete Messungs-Korrekturparameter für spezielle geografische Positionen und Bezugshöhen speichert.

**7.** Vorrichtung nach Anspruch 5, wobei die Steuereinheit (540) einen relevanten Messungs-Korrekturparameter im Zusammenhang mit der Berechnung der Position des Flugzeugs (100, 400) berechnet.

**Revendications**

**1.** Procédé pour assurer la navigation d'un aéronef (100, 400) au moyen d'une télémesure comprenant les étapes consistant à :

- mesurer une distance entre l'aéronef (100, 400) et une surface (410) au-dessus de laquelle l'aéronef (100, 400) se déplace,
- enregistrer un mouvement relatif de l'aéronef (100, 400),
- récupérer des informations topographiques concernant la distance verticale entre la surface (410) et le niveau moyen de la mer (300) à certaines positions géographiques, et
- combiner la distance et le mouvement relatif avec les informations topographiques pour déterminer une position géographique, dans lequel

- la télémesure utilisant un paramètre de correction de mesure qui, pour chaque position géographique et altitude par rapport au niveau moyen de la mer (300) indique une estimation d'une inclinaison du dispositif de télémesure (510) pour mesurer une distance la plus courte entre l'aéronef (100, 400) et la surface (410) dans une direction qui dévie d'une direction de mesure souhaitée, dans lequel

- la direction de mesure souhaitée est représentée par une ligne verticale imaginaire entre l'aéronef (100, 400) et le niveau moyen de la mer (300), **caractérisé en ce que** le procédé consiste en outre à :
- calculer, pour chaque position géographique et altitude, une distance corrigée en tant que somme de la distance mesurée et du paramètre de correction de mesure, et
- calculer le paramètre de correction de mesure en tant que différence maximale entre une distance correcte à la position géographique et à l'altitude particulières et une distance mesurée de façon erronée attendue à cette position et altitude.

**2.** Procédé selon la revendication 1, consistant à calculer la distance mesurée de façon erronée attendue de la façon suivante :

$$\sqrt{(X_0 - X_1)^2 + (Y_0 - Y_1)^2 + (h_{msl} - h_{top}(X_1, Y_1))^2}$$

où $X_0$, $Y_0$ indique la position géographique particulière,
$h_{msl}$ indique l'altitude particulière,
$X_1$ $Y_1$ indique la position géographique sur la surface (410) par rapport à laquelle on s'attend à ce que le dispositif de télémesure (510) mesure une distance erronée, et
$H_{top}(X_1, Y_1)$ indique la distance verticale de la surface (410) par rapport au niveau moyen de la mer (300) à la position géographique par rapport à laquelle on s'attend à ce que le dispositif de télémesure (510) mesure la distance erronée.

**3.** Programme informatique chargeable directement dans la mémoire interne d'un ordinateur, comprenant un logiciel pour effectuer les étapes de l'une quelconque des revendications 1 et 2 lorsque ledit programme est exécuté sur l'ordinateur.

**4.** Support lisible sur ordinateur, dans lequel est enregistré un programme, le programme étant destiné à faire exécuter à un ordinateur les étapes selon l'une quelconque des revendications 1 et 2.

5. Appareil pour assurer la navigation d'un aéronef (100, 400) au moyen d'une télémesure comprenant :

- un dispositif de télémesure (510) mesurant une distance entre l'aéronef (100, 400) et une surface (410),
- un dispositif de mesure de mouvement (520) mesurant un mouvement relatif de l'aéronef (100, 400),
- une base de données (530) contenant des informations concernant la distance verticale entre la surface (410) et le niveau moyen de la mer (300) à certaines positions géographiques, et
- une unité de commande (540) calculant la position géographique de l'aéronef (100, 400) sur la base d'au moins une combinaison de la distance et du mouvement relatif, dans lequel,

- pour chaque position géographique et altitude par rapport au niveau moyen de la mer (300), un paramètre de correction de mesure indique une estimation d'une inclinaison du dispositif de télémesure (510) pour mesurer une distance la plus courte entre l'aéronef (100, 400) et la surface (410) dans une direction qui dévie d'une direction de mesure souhaitée, la direction de mesure souhaitée étant représentée par une ligne verticale imaginaire entre l'aéronef et le niveau moyen de la mer (300), et
- l'unité de commande (540) prenant en compte le paramètre de correction de mesure lors du calcul de la position géographique de l'aéronef (100, 400), **caractérisé en ce que**

- une distance corrigée est calculée, pour chaque position géographique et altitude, en tant que somme de la distance mesurée et du paramètre de correction de mesure, et
- le paramètre de correction de mesure est calculé en tant que différence maximale entre une distance correcte à la position géographique et l'altitude particulières et une distance mesurée de façon erronée attendue à cette position et altitude.

6. Appareil selon la revendication 5, dans lequel la base de données (530) stocke des paramètres de correction de mesure pré-calculés pour des positions géographiques et altitudes de référence spécifiques.

7. Appareil selon la revendication 5, dans lequel l'unité de commande (540) calcule un paramètre de correction de mesure pertinent par rapport au calcul de la position de l'aéronef (100, 400).

set$_i$

100

**Fig. 1**

set$_i$

200

100

$h_{gnd}(i)$

**Fig. 2**

set$_{i \| i+1}$

set$_i$

set$_{i+1}$

$h_{gnd}(i+1)$

300

$h_{msl}$

$h_{top}$

**Fig. 3**

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. Bergljung et al.** Saab NINS - An automated Navigation System. *Saab NINS - An automated Navigation System,* 01 November 1999

- **Pucar et al.** SAAB" NINS/NILS - an autonomous landing system for Gripen. *IEEE 2000 Position Location and Navigation Symposium,* 13 March 2000, 254-261